# EUROPÄISCHE PATENTSCHRIFT

(11) **EP 0 524 375 B1**
(45) Veröffentlichungstag und Bekanntmachung des Hinweises auf die Patenterteilung: **01.03.1995**
(21) Anmeldenummer: 92106397.0
(22) Anmeldetag: 14.04.1992
(51) Int. Cl.: A21C 13/00

(54) **Durchlauf-Gärschrank**
Continuous-flow proofing chamber
Chambre de fermentation continue

(30) Priorität: 29.06.1991 DE 4121587
(43) Veröffentlichungstag der Anmeldung: 27.01.1993
(73) Patentinhaber: Werner & Pfleiderer GmbH, 70469 Stuttgart (DE)
(72) Erfinder: Müller, Gerhard, Dipl.-Ing., W-7144 Asperg (DE)

(56) Entgegenhaltungen:
- WO-A-88/08669
- DE-C- 574 335
- US-A- 3 018 742
- US-A- 3 677 393

## Beschreibung

Die Erfindung betrifft einen Durchlauf-Gärschrank, bei dem mit Teiglingen bestückte Gärgutträger mittels eines Transportsystems ein ganz bestimmtes Klima durchlaufen.

Es sind unterschiedliche Transportsysteme für Gärschränke mit endlosen Fördervorrichtungen (z.B. DE-GM 90 12 398) bekannt, bei denen die Gärgutträger an Kettenpaare eingehangen werden. Gleichgültig, ob es sich dabei um kettengeführte Schaukelgehänge oder um mehrlagige Linear-Systeme handelt, allen diesen Fördersystemen haftet der Mangel an, dass sie auf Grund der notwendigen Kettenumlenkungen relativ viel Platz benötigen. Dadurch ist nur eine geringe Belegungsdichte in Gärschränken möglich, die dadurch unnötig gross und teuer werden sowie viel Platz benötigen.
Zur Erhöhung der Belegungsdichte sind auch Stapel-Fördersysteme bekannt. Aus der DE-PS 1 186 003 ist es bekannt, Gärgutträger mittels zwei sich parallel zueinander bewegenden Kettensträngen, die aus einem grösseren äusseren und einem kleineren mittleren Kettenstrang bestehen, schrittweise in einem vorderen Abteil des Gärschrankes anzuheben und nach einer waagerechten Überführung am oberen Ende zu einem hinteren Abteil wieder schrittweise abzusenken. Hierbei ist eine hohe Belegungsdichte innerhalb des Hub- und Senkstapels gegeben. Allerdings müssen bei der oberen und unteren Umlenkung der Ketten noch mehrere Aufnahmebolzen für die Gärgutträger frei bleiben. Weiterhin ist mit diesem Stapelsystem, wegen der Unstabilität der Kettenstränge, eine erschütterungsfreie Übergabe der nach dem Gärprozess sehr empfindlichen Teiglingen an der automatischen Ausgabestation schwierig, da nicht immer exakt die gleiche Endstellung erreicht wird und somit beim mechanischen Herausschieben der Gärgutträger auf das Ausgabetransportband Erschütterungen und Stösse auftreten. Dies um so mehr, wenn die Teiglingsart gewechselt oder eine unterschiedliche Belegungsdichte im Gärschrank vorliegt. Ferner sind Kettentransportsysteme sehr materialintensiv und schwer.

Der Erfindung liegt die Aufgabe zugrunde, bei einem Durchlauf-Gärschrank, der im Oberbegriff des Patentanspruches 1 erwähnten Gattung durch ein neuartiges Fördersystem eine bessere Raumausnutzung im Gärschrank sowie eine erschütterungs- und stossfreie Übergabe der Teiglinge an der Ausgabestation zu erreichen.

Die Aufgabe wird erfindungsgemäss durch die im Kennzeichnungsteil des Patentanspruches 1 angegebenen Merkmale gelöst.
Mit der Erfindung wird bei niedrigem Materialeinsatz - auf Grund der starren Stangenpaare - eine hohe Transportleistung bei einer hohen Belegungsdichte erzielt. Es können praktisch alle Etagen des Aufzugs- und Sinkschachtes im Gärschrank mit Gärgutträgern belegt werden. Nur die Etage der Eingabestation muss zum Befüllen leer sein bzw. ist nach einem Hubschritt wieder frei. Ein weiterer erheblicher Vorteil gegenüber dem aus Ketten bestehenden Fördersystem besteht in der stets - unabhängig von der Belegungsdichte (Gewichtsbelastung) - stoss- und erschütterungsfreien Übergabe der Gärgutträger an der Ausgabestation, da keine Veränderungen im Etagenabstand eintreten können.

In Weiterbildung der Erfindung nach den Merkmalen des Anspruches 2 ist eine vorteilhafte Aufnahme der Gärgutträger und ein sicherer schrittweiser Transport im Aufzugs- und Sinkschacht des Gärschrankes gesichert.

Eine besonders günstige Weiterbildung der Erfindung ist durch die Merkmale des Anspruches 3 gegeben, da hierdurch die Übergabe der Gärgutträger an der Eingabestation vereinfacht und sicherer gestaltet werden kann.

Durch eine weitere Ausbildung nach den Merkmalen der Ansprüche 4 bis 6 ist ein sicherer und vorteilhafter Durchlauf von mehreren Längsreihen von Gärgutträgern mit einheitlichen Breitenabmessungen sowie ein günstiger waagerechter Transport von Aufzug- zum Sinkschacht gegeben.
Besonders zweckmässige Ausgestaltungen der Erfindung liegen nach den Merkmalen der Ansprüche 7 und 8 vor, da hiernach Gärgutträger mit unterschiedlichen Breitenabmessungen aufgenommen werden können. Die Gärgutträger können dabei in den Längsreihen ohne Zwischenabstände entsprechend der nachfolgenden Ofenbreite aufgenommen werden, so dass sich bei der Übergabe auf den Ofentransport ein Umsetzen der Gärgutträger erübrigt. Zusätzliche Vorteile ergeben sich aus der Weiterbildung nach den Merkmalen des Anspruches 9, hiernach kann auch Kapselware (grössere Höhe, hohes Gewicht) im gleichen Gärschrank - in dem sonst, bei Belegung jeder Etage Blechware (geringe Höhe, kleines Gewicht) durchläuft - gegärt werden. Zweckmässige Antriebsarten für die erfindungsgemässen Stangenpaare für den vertikalen Transport der Gärgutträger sind nach den Merkmalen der Ansprüche 10 und 11 aufgezeigt.

Eine besonders zweckmässige Ausgestaltung der Antriebe für die Stangenpaare ist nach den Merkmalen des Anspruches 12 gegeben, hiernach ist eine schnelle Schwenkbewegung der Stangenpaare sowie jederzeit eine sichere und gleichmässige Hubbewegung für den vertikalen Transport der Gärgutträger sichergestellt.

Mit dem neuen Transportsystem kann auch problemlos eine Veränderung der Gärzeit und eine Anpassung an die Durchsatzleistung des nachgeschalteten Band-Durchlaufofens auf einfacher Weise - durch Veränderung des Zeittaktes für die Hubschrittfolge - vorgenommen werden.

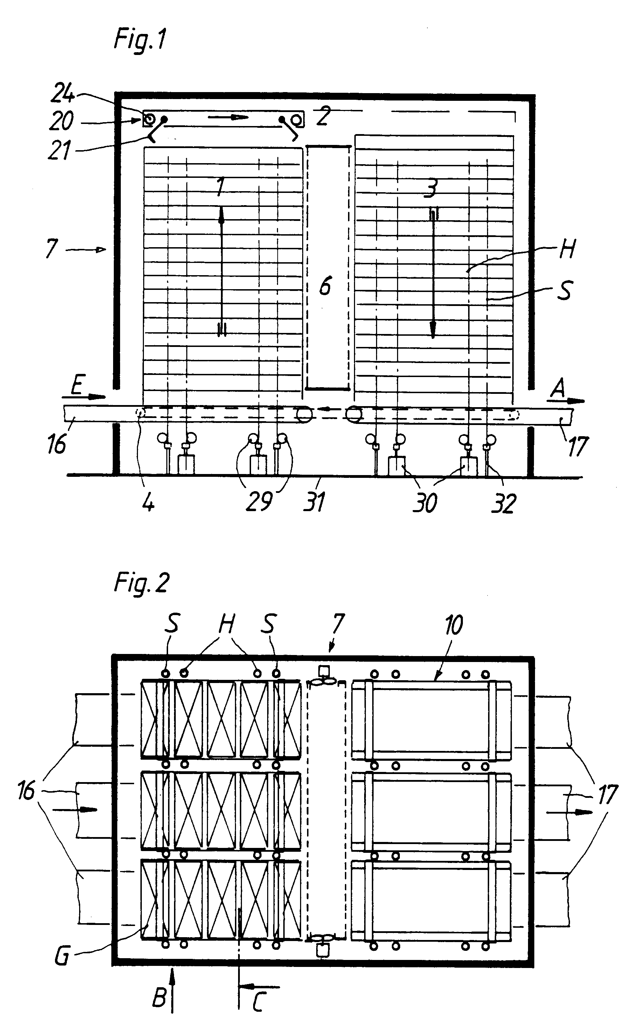

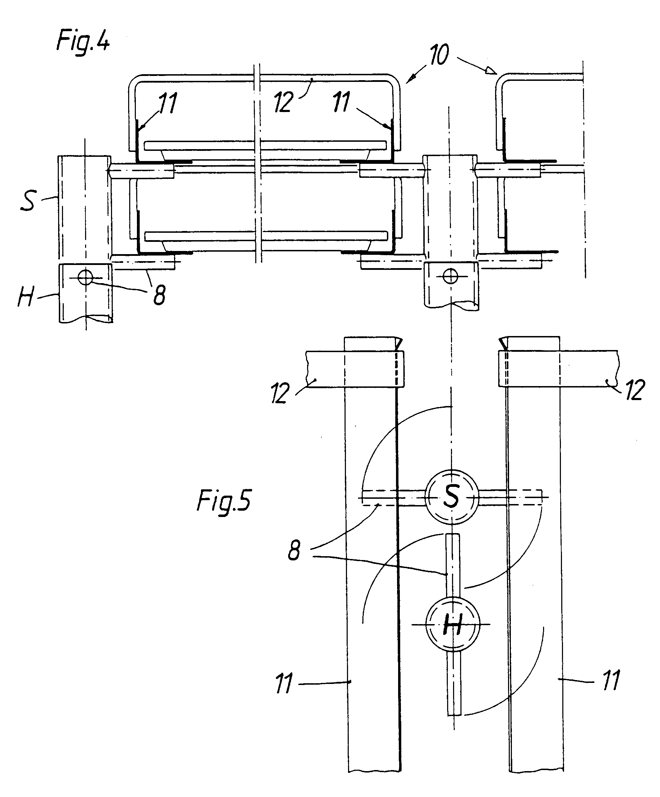

In der Zeichnung ist der Erfindungsgegenstand an Hand von Ausführungsbeispielen schematisch veranschaulicht. In der Zeichnung zeigt:
- Fig. 1: Aufriss eines Durchlauf-Gärschrankes mit Kabinen
- Fig. 2: Grundriss nach Fig. 1
- Fig. 3: Detailansicht in Pfeilrichtung B gem. Fig. 2
- Fig. 4: Detailansicht in Pfeilrichtung C gem. Fig. 2 ohne Längsträger 26 und Führungslager 27 gezeichnet
- Fig. 5: Draufsicht auf Fig.4
- Fig. 6: Aufriss eines Durchlauf-Gärschrankes mit Paletten
- Fig. 7: Grundriss nach Fig. 6
Bei der Ausführungsform nach Fig. 1 und 2 ist ein als Nachgärschrank 7 ausgebildeter Durchlauf-Gärschrank gezeigt bei dem die über die Eingabestation E zugeführten Gärgutträger in einem Aufzugsschacht 1 schrittweise nach oben gefördert werden. Oben befindet sich ein Transferraum 2, in dem der waagerechte Transport zu einem Sinkschacht 3 erfolgt, in dem sich die schrittweise Abwärtsbewegung zur Ausgabestation A anschliesst. Für den vertikalen Transport sind in dem Aufzugs- 1 und Sinkschacht 3 des Gärschrankes 7 mehrere Stangenpaare S und H angeordnet, die in Etagenabständen mit waagerechten Bolzen 8 für die Aufnahme der Gärgutträger G ausgerüstet sind. Die Stangenpaare S und H sind um 90° hin- und herschwenkbar angeordnet, wobei die H-Stangen zusätzlich um den Hub X heb- und senkbar ausgebildet sind. Über Zuführbänder 16 gelangen die Gärgutträger G über die Eingabestation E in die als Trägerelemente ausgebildeten Kabinen 10. Die Kabinen 10 bestehen aus zwei Winkelschienen 11, die entsprechend der Länge des Aufzugsschachtes 1 bzw. Sinkschachtes 3 ausgebildet sind und die jeweils mit mindestens zwei Bügeln 12 starr miteinander zu der erwähnten Kabine 10 (Fig.4) verbunden sind. Wie der Fig. 2 entnehmbar ist, sind mehrere (hier 3) Kabinen 10 quer zur Längsrichtung der Schächte 1 und 3 des Gärschrankes 7 angeordnet. Dabei sind im Aufzugsschacht 1 je Kabine 10 mehrere mit Teiglingen (nicht gezeichnet) versehene Gärgutträger G (5 Stück) aufgegeben. Im Sinkschacht 3 sind die Kabinen 10 ohne Gärgutträger G dargestellt. Die als vertikale Fördermittel vorgesehenen Stangenpaare S und H - je Kabine 10 vier Paar - sind in Längsrichtung des Gärschrankes im Aufzugs- und Sinkschacht 1 und 3 angeordnet. Die zwischen den Kabinen 10 angeordneten Stangenpaare S und H sind jeweils beidseitig entsprechend dem Etagenabstand Y mit waagerechten Bolzen 8 ausgerüstet auf denen die Kabinen 10 aufliegen. Hierdurch wird Platz im Gärschrank und Antriebsaufwand eingespart, da die Stangenpaare beide Stapel gleichzeitig bedienen können. über einen pneumatischen Antrieb 29, dessen Einzelelemente nicht näher gezeigt und beschrieben sind, sind die Stangen S und H der Stangenpaare um 90° hin und her schwenkbar. Die H Stangen sind zusätzlich über einen Hydraulikzylinder 30 um den Hub X heb- und senkbar ausgebildet. Oben sind die Stangenpaare S und H mit Führungslagern 27 ausgerüstet und unten sind Stützlager 28 vorgesehen. Die Stützlager 28 sind über Sockel 32 bei den S-Stangen und über die Zylinder 30 bei den H-Stangen auf den Boden 31 des Gärschrankes 7 befestigt.

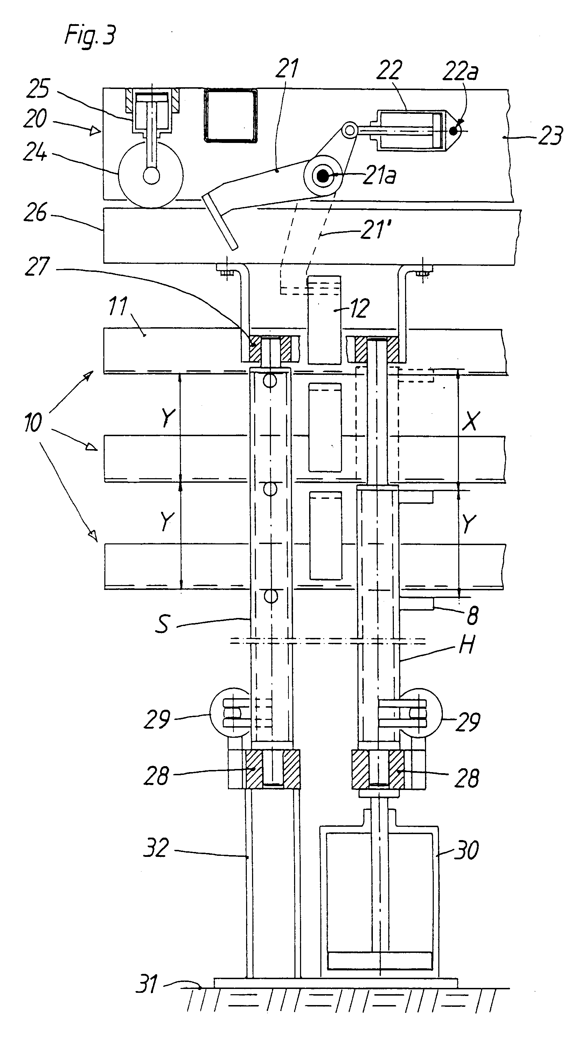

Im Transferraum 2 ist ein mit Greifern 21 versehener Wagen 20 für den waagerechten Transport der Kabinen 10 von 1 nach 3 angeordnet. Der mit Laufrollen 24 ausgerüstete Wagen 20 (Fig.3) ist auf den Längstträgern 26, die den Transferraum 2 überspannen, hin- und herfahrbar ausgebildet. Die Greifer 21 sind über die Bolzen 21a schwenkbar gelagert und stehen mit einem Zylinder 22, der über den Bolzen 22a an der Seitenwange 23 des Wagens 20 gelagert ist, in Wirkungsverbindung. In der eingeschwenkten Stellung (gestrichelt gezeichnet und mit 21' bezeichnet) greifen die Greifer unter die Bügel 12 der Kabine 10. Danach fahren die Zylinder 25 aus und der Wagen 20 mit Kabinen 10 wird angehoben und kann über den Sinkschacht 3 gefahren werden. Dort wird der Wagen 20 durch Einfahren der Zylinder 25 abgesenkt und hierdurch die Kabine 10 sicher auf die Bolzen 8 der Stangenpaare S und H in der obersten Etage des Sinkschachtes 3 abgesetzt, nachdem die Greifer 21 aus den Bügeln 12 ausgeschwenkt sind, kann der Wagen 20 zum Aufzugsschacht 1 zurückkehren. Für den Rücktransport der Kabinen 10 ist in der untersten Etage ein Transportband 4 vorgesehen, welches die in der Ausgabestation A entleerten Kabine 10 zur Eingabestation zurückbringt. Zwischen dem Aufzugsschacht 1 und dem Sinkschacht 3 ist ein Zuluftkanal 6 angeordnet, dessen Lochwände 61 die Klimatisierung des Gärschrankes 7 über die Lüfter 62 ermöglichen.

Der Vertikaltransport arbeitet nun in folgendem Rhythmus:
In der Ausgangsposition stehen die S-Stangen mit ihren Bolzen 8 in Querrichtung, die Winkelschienen 11 der Kabinen 10 liegen auf den Bolzen 8 auf. Die Bolzen 8 der H-Stangen stehen in Längsrichtung und sie befinden sich auf einem Niveau, das einige Millimeter (Bewegungsspiel entsprechend Hub X) unter dem der S-Stange-Bolzen liegt (Fig.4).

Soll ein Transportschritt der Kabinen 10 in vertikaler Richtung erfolgen, so schwenken die H-Stangen in die Querstellung, danach setzt die Hubbewegung ein. Sind die Kabinen 10 von den Bolzen 8 der H-Stangen aufgenommen, schwenken die S-Stangen in die Längsstellung. Hat die Hubbewegung Etagenhöhe plus einige Millimeter erreicht, schwenken die S-Stangen in die Querstellung zurück. Danach setzt die Absenkbewegung der H-Stangen ein, die, sobald die Kabinen 10 auf die Bolzen 8 der S-Stangen aufgesetzt haben, in die Längsstellung zurückschwenken. Die H-Stangen bewegen sich dann weiter abwärts, bis sie das Ausgangsniveau wieder erreicht haben.
Somit können die Kabinen 10 schrittweise im Aufzugsschacht 1 nach oben gefördert werden und oben wie vorher beschrieben mit dem Wagen 20 zum Sinkschacht 3 gefahren werden. Im Sinkschacht 3 erfolgt der Abwärtstransport der Kabinen 10 durch eine umgekehrte Reihenfolge der Bewegungsschritte der Stangenpaare S und H. Es sind alle Etagen mit Kabinen 10 belegt, dadurch wird eine gute Raumausnützung und Reduzierung des Materialeinsatzes erreicht. Nur im Transferraum 2 bzw. in der Ein- und Ausgabeetage ist wechselweise ein Kabinenplatz leer.

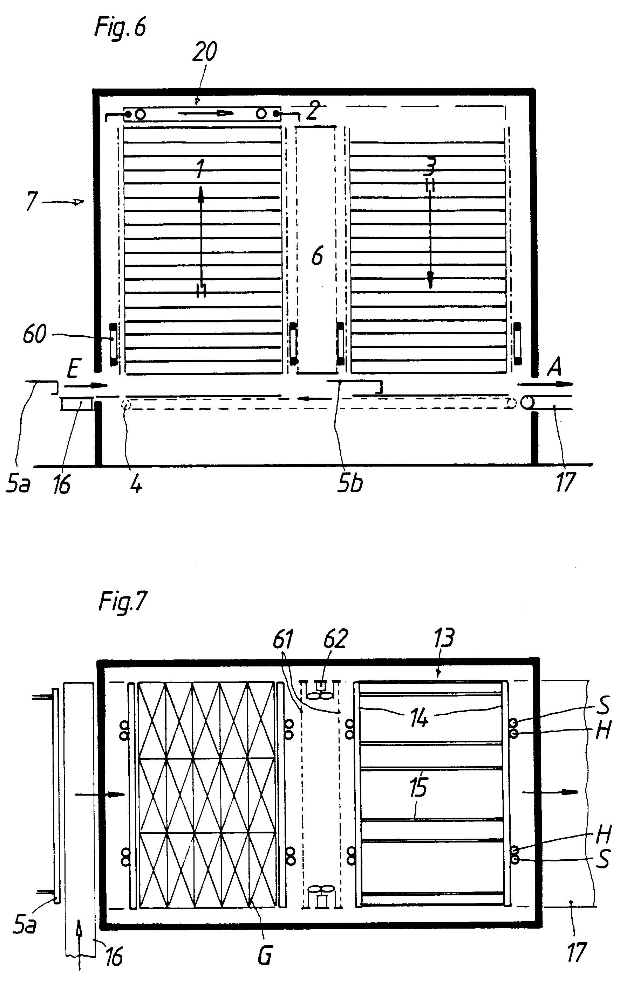

Nach einem weiteren Ausführungsbeispiel (Fig. 6 und 7) ist der Nachgärschrank 7 anstelle mit den Kabinen 10 mit Paletten 13 bestückt. Die rahmenartigen Paletten 13 bestehen aus Querholmen 14 und Längsholmen 15 und überspannen die gesamte horizontale Fläche des Aufzug- bzw. Sinkschachtes 1 und 3 des Gärschrankes. Die Paletten 13 sind damit so breit wie der nachfolgende Ofentransport, so dass mehrere Gärgutträger G nebeneinander ohne Zwischenabstände aufgegeben und bei der Übergabe auf den Ofentransport kein Umsetzen der bereits aneinander liegenden Gärgutträger notwendig wird.

Da die Länge der Paletten 13 (Abmessung in Laufrichtung) kleiner ist als die Breite, sind die Stangenpaare S und H für den Stapeltransport nicht mehr an den Längsseiten der Stapel sondern stirnseitig angeordnet in einem Abstand, der kleinste Durchbiegungen der Paletten 13 ergibt. Auf diese Weise ist es möglich, die Bauhöhe der Paletten 13 zwecks hoher Belegungsdichte im Stapel gering zu halten.

Die Wirkungsweise beim Stapeltransport im Aufzug- und Sinkschacht 1 und 3 ist die gleiche wie im ersten Ausführungsbeispiel an Hand der Kabinen 10 beschrieben. Änderungen ergeben sich nur dahingehend, dass die Abstützung der Stangenpaare S und H nicht direkt auf den Boden 31 des Gärschrankes 7 erfolgt sondern auf an die Ein- und Ausgabeetage überspannende Querträger 60. Während der Ein- und Ausgabe der Gärgutträger G verharren die H-Stangen in ihrer oberen Endstellung, um die Transport-Kanäle in der Ein- und Ausgabe-Etage frei zu halten. Dabei werden die auf einem Transportband 16 ankommenden Gärgutträger G über einen Eingabe-Pusher 5a auf eine leere Palette 13 geschoben. Nach dem Gärschrankdurchlauf erfolgt die Ausgabe der Gärgutträger G über einen Ausgabe-Pusher 5b auf ein Ofentransportband 17. Die leere Palette 13 wird mit dem Transportband 4 wieder zur Eingabestation in den Aufzugsschacht 1 gefördert. Beim oberen waagerechten Transport greifen die Greifer 21 unter die Querholme 14 der Palette 13.

Ein Vorteil dieser Paletten-Variante ist, dass die Paletten mit den unterschiedlichsten Gärgutträger belegt werden können (Bleche, Peal-Boards, Kapseln,Körben bzw. Kapsel-oder Korb-Verbände), deren Abmessungen (Länge und Breite) nicht zwingend einheitlich sein müssen.
Einen zusätzlichen Vorteil eröffnet der Paletten-Gärschrank für den Fall, dass sowohl Kapselware (Hohes Gewicht, grosse Höhe) als auch Blechware (Kleines Gewicht, kleine Höhe, dafür mehr Flächenbedarf) gegärt werden sollen.
Ein derartiger Kombinations-Nachgärschrank hätte im Stapel einen kleinen Etagenabstand und relativ dünne Paletten.
Beim Betrieb mit Blechware wird jede Palette 13 und jede Etage belegt (kleine Höhe, grosse Fläche).
Bei Kapselware werden zwei Paletten 13 (zu einer Doppelpalette) aufeinandergelegt (Erhöhung der Tragfähigkeit), dafür wird im Stapel nur jede zweite Etage der Stangenpaare S und H belegt (Doppelte Höhe, halbe Fläche, die jedoch für die Kapselware ausreicht).

Diese Verfahrensweise ergibt einen Schrank, dessen Gärfläche bei Blechware verdoppelt werden kann gegenüber der Kapselware, dessen Baugrösse jedoch nur um ca. 10% grösser wird gegenüber einem Einzweck- Kapsel-Nachgärschrank.
Die Belegung jeder zweiten Etage mit einer Doppelpalette 13 ist in der Zeichnung nicht dargestellt, da dies für einen Fachmann an Hand der vorstehenden Ausführungen leicht vorstellbar und nachvollziehbar ist. Auch die Aufnahme von Gärgutträgern G oder Gärgutträgerverbände direkt auf die Bolzen 8 der Stangenpaare S und H (ohne Kabinen 10 oder Paletten 13) ist mit diesen neuen Stangentransportsystemen ohne weiteres durchführbar. Dabei müssen die Gärgutträger immer die gleiche Breitenabmessung aufweisen und entsprechend stabil ausgeführt sein. Bei einer direkten Aufgabe von Gärgutträgern G entfällt das Transportband 4 in der Ein-Ausgabeetage des Gärschrankes 7.

## Patentansprüche

1. Durchlauf-Gärschrank für mit Teiglingen bestückte Gärgutträger, die im unteren Bereich dem Gärschrank zugeführt und mittels mit Aufnahmeelementen versehenen vertikalen parallelen Fördermitteln schrittweise im vorderen Bereich (Aufzugsschacht) des Gärschrankes nach oben gefördert werden, wobei am oberen Ende der oberste Gärgutträger mit einem Förderer waagrecht zum mit analogen Fördermitteln versehenen hinteren Bereich (Sinkschacht) überführt und dort schrittweise nach unten einer Ausgabestation zugeführt werden, dadurch gekennzeichnet, dass als vertikale Fördermittel mehrere Stangenpaare (S und H), von denen jeweils eine Stange (S) schwenkbar und die andere Stange (H) schwenk- und hebbar ausgebildet ist, im Gärschrank (7) angeordnet sind.

2. Durchlauf-Gärschrank nach Anspruch 1, dadurch gekennzeichnet, dass die einzelnen Stangen der Stangenpaare (S und H) unabhängig voneinander soweit schwenkbar ausgebildet sind, dass die als Bolzen (8) ausgebildeten Aufnahmeelemente in den Transportbereich der Gärgutträger (G) ein- und ausschwenkbar sind, wobei die Stangen (H) zusätzlich um den Hub (X), der dem Etagenabstand (Y) der Bolzen (8) plus einem oberen und unteren geringen Bewegungsspielraum entspricht, heb- und senkbar angeordnet sind.

3. Durchlauf-Garschrank nach den Ansprüchen 1 oder 2, dadurch gekennzeichnet, dass in den Etagen des Aufzugsschachtes (1) und Sinkschachtes (3) im Kreislauf geführte Trägerelemente zur Aufnahme der Gärgutträger (G) angeordnet sind.

4. Durchlauf-Gärschrank nach Anspruch 3, dadurch gekennzeichnet, dass die Trägerelemente als Kabinen (10) ausgebildet sind, die jeweils aus zwei nach Massgabe der Gärgutträger (G) starr über Bügeln (12) verbundenen Winkelschienen (11) bestehen.

5. Durchlauf-Gärschrank nach Anspruch 4, dadurch gekennzeichnet, dass mehrere Kabinen (10) nebeneinander in Längsrichtung angeordnet sind.

6. Durchlauf-Gärschrank nach Anspruch 5, dadurch gekennzeichnet, dass die Stangenpaare (S und H) in Längsrichtung angeordnet sind, wobei die zwischen zwei Kabinen (10) angeordneten Stangenpaare (S und H) jeweils beidseitig mit Bolzen (8) versehen sind.

7. Durchlauf-Gärschrank nach Anspruch 3, dadurch gekennzeichnet, dass die Trägerelemente aus die ganze horizontale Transportfläche überspannenden rahmenartigen Paletten (13) bestehen.

8. Durchlauf-Gärschrank nach Anspruch 7, dadurch gekennzeichnet, dass die Stangenpaare (S und H) quer zur waagrechten Transportrichtung so angeordnet sind, dass die Paletten (13) nur einer geringen Durchbiegung unterliegen.

9. Durchlauf-Gärschrank nach Anspruch 7 und 8, dadurch gekennzeichnet, dass nur jede zweite Etage mit einer Doppel-Palette (13) bestückt ist.

10. Durchlauf-Gärschrank nach Anspruch 1, dadurch gekennzeichnet, dass die Stangenpaare (S und H) mit einem hydraulischen Antrieb verbunden sind.

11. Durchlauf-Gärschrank nach Anspruch 1, dadurch gekennzeichnet, dass die Stangenpaare (S und H) mit einem elektrischen Antrieb verbunden sind.

12. Durchlauf-Gärschrank nach Anspruch 1, dadurch gekennzeichnet, dass die Stangenpaare (S und H) zur Erzielung der Schwenkbewegung mit einer pneumatischen Betätigungseinrichtung (29) verbunden sind, wobei den Stangen (H) zur Realisierung der Hubbewegungen (X) hydraulische Betätigungseinrichtungen (30) zugeordnet sind.

## Claims

1. Continuous flow fermentation cabinet for fermentation stock carriers which are charged with dough pieces, are fed to the fermentation cabinet in the lower region and which are conveyed upwardly in steps in the front region (raising shaft) of the fermentation cabinet by means of parallel vertical conveying means provided with receptacle elements, wherein the uppermost fermentation stock carrier is transferred horizontally at the upper end to the rear region (lowering shaft) provided with analogous conveying means, and there fed downwardly in steps to a delivery station, characterised thereby, that several rod pairs (S and H), of each of which one rod (S) is constructed to be pivotable and the other rod (H) is constructed to be pivotable and raisable, are arranged as vertical conveying means in the fermentation cabinet (7).

2. Continuous flow fermentation cabinet according to claim 1, characterised thereby, that the individual rods of the rod pairs (S and H) are constructed to be pivotable each independently of the other so far that the receptacle elements, which are constructed as pins (8), are pivotable into and out of the transport region of the fermentation stock carriers (G), wherein the rods (H) are arranged additionally to be raisable and lowerable by the stroke (X), which corresponds to the tier spacing (Y) of the pins (8) plus an upper and a lower small clearance for movement.

3. Continuous flow fermentation cabinet according to claim 1 or 2, characterised thereby, that carrier elements for the reception of the fermentation stock carriers (G) are guided in circulation and arranged in the tiers of the raising shaft (1) and the lowering shaft (3).

4. Continuous flow fermentation cabinet according to claim 3, characterised thereby, that the carrier elements are constructed as cages (10), which each consist of two bracket rails (11), which are rigidly connected by way of yokes (12) in accordance with the fermentation stock carriers (G).

5. Continuous flow fermentation cabinet according to claim 4, characterised thereby, that several cages (10) are arranged one beside the other in longitudinal direction.

6. Continuous flow fermentation cabinet according to claim 5, characterised thereby, that the rod pairs (S and H) are arranged in longitudinal direction, wherein the rod pairs (S and H) arranged between two cages (10) are each provided with pins (8) at both sides.

7. Continuous flow fermentation cabinet according to claim 3, characterised thereby, that the carrier elements consist of framelike pal lets (13) spanning the entire horizontal transport surface.

8. Continuous flow fermentation cabinet according to claim 7, characterised thereby, that the rod pairs (S and H) are so arranged transversely to the horizontal transport direction that the pallets (13) are subject to an only small sagging.

9. Continuous flow fermentation cabinet according to claim 7 and 8, characterised thereby, that only every second tier is equipped with a double pallet (13).

10. Continuous flow fermentation cabinet according to claim 1, characterised thereby, that the rod pairs (S and H) are connected with an hydraulic drive.

11. Continuous flow fermentation cabinet according to claim 1, characterised thereby, that the rod pairs (S and H) are connected with an electrical drive.

12. Continuous flow fermentation cabinet according to claim 1, characterised thereby, that the rod pairs (S and H) are connected with a pneumatic actuating equipment (29) to achieve the pivotal movement, wherein hydraulic actuating equipments (30) are associated with the rods (H) to realise the stroke movements (X).

## Revendications

1. Chambre de fermentation continue pour supports de matière à fermenter garnis de pâtons, qui sont amenés à la chambre de fermentation dans la zone inférieure de celle-ci et transportés pas à pas vers le haut dans la zone avant (cage de montée) de la chambre par des moyens de transport verticaux parallèles pourvus d'éléments d'appui pour la réception, le support de matière à fermenter le plus haut étant chaque fois transféré, a l'extrémité supérieure, par un transporteur, vers la zone arrière (cage de descente), pourvue de moyens de transport analogues, où les supports de matière à fermenter sont amenés pas à pas vers le bas jusqu'à un poste de délivrance, caractérisée en ce que les moyens de transport verticaux sont formés par plusieurs paires de barres (S et H) dont une barre (S) est chaque fois montée pivotante et l'autre barre (H) est montée pivotante et relevable dans la chambre de fermentation (7).

2. Chambre de fermentation continue selon la revendication 1, caractérisée en ce que les différentes barres des paires de barres (S et H) sont réalisées pour pouvoir être animées, indépendamment l'une de l'autre, de pivotements dans une mesure telle que les éléments d'appui pour la réception, réalisés sous forme de tiges (8), peuvent être engagés par pivotement dans la zone de transport des supports de matière à fermenter (G), et peuvent être dégagés par pivotement de cette zone de transport, les barres (H) étant montées de manière que, en plus, elles puissent être soulevées et abaissées d'une hauteur ou course (X) qui correspond à l'espacement (Y) des étages définis par les tiges (8) plus un faible jeu en haut et en bas.

3. Chambre de fermentation continue selon la revendication 1 ou 2, caractérisée en ce que des éléments porteurs, destinés à recevoir les supports de matière à fermenter (G) et guidés dans un circuit fermé, sont disposés dans les étages de la cage de montée (1) et de la cage de descente (3).

4. Chambre de fermentation continue selon la revendication 3, caractérisée en ce que les éléments porteurs sont réalisés comme des cabines (10) formées chacune de deux cornières (11) reliées rigidement entre elles, en fonction des supports de matière à fermenter (G), par des étriers (12).

5. Chambre de fermentation continue selon la revendication 4, caractérisée en ce que plusieurs cabines (10) sont disposées l'une à côté de l'autre dans la direction longitudinale.

6. Chambre de fermentation continue selon la revendication 5, caractérisée en ce que les paires de barres (S et H) sont disposées dans la direction longitudinale et les paires de barres (S et H) placées entre deux cabines (10) sont pourvues chaque fois de tiges d'appui (8) sur les deux côtés.

7. Chambre de fermentation continue selon la revendication 3, caractérisée en ce que les éléments porteurs sont des palettes (13) semblables à des cadres et s'étendant sur toute la surface horizontale de transport.

8. Chambre de fermentation continue selon la revendication 7, caractérisée en ce que les paires de barres (S et H) sont disposées, transversalement à la direction de transport horizontale, de manière que les palettes (13) présentent seulement un faible fléchissement.

9. Chambre de fermentation continue selon la revendication 7 ou 8, caractérisée en ce que chaque deuxième étage seulement est garni d'une double palette (13).

10. Chambre de fermentation continue selon la revendication 1, caractérisée en ce que les paires de barres (S et H) sont reliées à une commande hydraulique.

11. Chambre de fermentation continue selon la revendication 1, caractérisée en ce que les paires de barres (S et H) sont reliées à une commande électrique.

12. Chambre de fermentation continue selon la revendication 1, caractérisée en ce que les paires de barres (S et H) sont reliées à un dispositif de commande pneumatique (29) servant à produire les pivotements, et des dispositifs de commande hydraulique (30) sont coordonnés aux barres (H) pour produire les mouvements de montée/descente (X).
